# EUROPÄISCHE PATENTSCHRIFT

(11) **EP 1 322 981 B1**
(45) Veröffentlichungstag und Bekanntmachung des Hinweises auf die Patenterteilung: **14.07.2004**
(21) Anmeldenummer: 01985780.4
(22) Anmeldetag: 24.09.2001
(51) Int. Cl.: G02B 6/44

(54) **SPLEISSKASSETTENEINSCHUB MIT ABDECKUNG**
PLUGBOARD
TABLEAU DE CONNEXIONS

(30) Priorität: 27.09.2000 GB 0023666
(43) Veröffentlichungstag der Anmeldung: 02.07.2003
(73) Patentinhaber: KRONE GmbH, 14167 Berlin (DE)
(72) Erfinder: TAYLOR, Christopher, Charles, Cheltenham, Gloucestershire GL52 6EN (GB)
(86) Internationale Anmeldenummer: PCT/EP2001/011018
(87) Internationale Veröffentlichungsnummer: WO 2002/027868

(56) Entgegenhaltungen:
- CH-A- 688 705
- GB-A- 2 312 053
- US-A- 4 792 203
- US-A- 5 781 686
- US-A- 5 835 657
- US-A- 5 946 440

## Beschreibung

Die vorliegende Erfindung betrifft Stecktafeln. Viele elektrische und elektronische Einrichtungen und Systeme verfügen über externe Ports, über die sie mit anderen Einrichtungen und Systemen kommunizieren können. Zum Beispiel können Computer über Kommunikationsnetze mit anderen Computern kommunizieren. In der Vergangenheit umfasste die Verbindung, die eine solche Kommunikation ermöglicht, im Allgemeinen elektrische Leitungen und Kabel, obwohl nunmehr ein zunehmender Trend in Richtung der Kommunikation unter Verwendung von Lichtleitfasern besteht. Damit Konfigurationen verändert werden können, erfolgt eine solche Verdrahtung und Verkabelung im Allgemeinen über eine als Stecktafel bekannte Einrichtung.

Stecktafeln sind Einrichtungen, die gewöhnlich in Gestellen angeordnet werden und ein Kabelverwaltungssystem zur Verbindung sehr vieler Kabel bereitstellen. Ein Gestell enthält in der Regel eine Reihe von Stecktafeln, die übereinander in dem Gestell angeordnet sind, wobei jede Stecktafel einen vorderen Tafelteil aufweist, der mit gegenüberliegenden Seitenwänden des Gestells verbunden ist. Bei einigen herkömmlichen Stecktafeln wurde die Hauptstruktur der Tafel selbst aus Metall aufgebaut, und dieser Metallteil trug einen sich nach hinten erstreckenden Teil, in den im Fall elektrischer Verbindungen eine oder mehrere elektrische Leiterplatten integriert werden.

Aus der US-A-5 835 657 ist eine Stecktafel zur Verwendung als Kabelverwaltungssystem oder als Teil eines solchen Systems bekannt, bestehend aus einem Hauptstrukturteil, das als einteiliges Kunststoffformteil ausgebildet ist und mindestens einen Eintritt zur Aufnahme eines Lichtleitfaserkabels oder - bündels aufweist, sowie Ausformungen, die Wege definieren, entlang denen sich Lichtleitfasern von dem Eintritt aus erstrecken können. Das Hauptstrukturteil weist eine Oberfläche auf, die zur Aufnahme von einer oder mehreren Vorsatzeinrichtungen dient.

Der Erfindung liegt das technische Problem zugrunde, eine Stecktafel zu schaffen, welche leicht, aber robust ist sowie kostengünstig in der Herstellung.

Gemäß der vorliegenden Erfindung wird eine Stecktafel zur Verwendung als Kabelverwaltungssystem oder als Teil eines solchen Systems zur Verbindung von Lichtleitfasern bereitgestellt, die einen Hauptstrukturteil umfasst, der als ein einziges Kunststoffformteil ausgebildet ist und mindestens einen Eintritt zur Aufnahme eines Lichtleitfaserkabels oder -bündels, Ausformungen, die Wege definieren, entlang denen sich Lichtleitfaserabschnitte von dem Eintritt aus erstrecken können, eine mittige Oberfläche zur Aufnahme eines oder mehrerer Vorsatzvorrichtungen, wie zum Beispiel einer Spleißeinheit, und einem oder mehreren Frontplattenteilen, die an der Vorderseite des Hauptstrukturteils angebracht werden können und eines oder mehrere Verbinderelemente enthalten, mit denen externe Lichtleitfasern verbunden werden können, definiert. Der Hauptstrukturteil kann so konfiguriert werden, dass ein Weg bzw. Wege definiert werden, um die herum sich Lichtleitfaserabschnitte erstrecken können.

Die Ausformungen umfassen Aussparungen und Rampen, wobei die Aussparungen auf gegenüberliegenden Seiten der mittigen Oberfläche angeordnet sind. Jede Aussparung ist mit einer Nabe ausgebildet. Die Rampen liefern einen glatten Übergang zwischen den Aussparungen und der Oberfläche des Hauptstrukturteils. Dabei ist zwischen jeder Aussparung und dem jeweiligen Eintritt eine weitere Rampe angeordnet.

Die Stecktafel kann ein Abdeckungs- oder Deckelglied enthalten, das an seitlichen Führungsgliedern, die die Stecktafel in einem Gestell stützen, angebracht werden kann. Eine Verriegelung kann bereitgestellt werden, um die Hauptstruktureinheit mit einem oder jedem Führungsglied zu verriegeln. Der Verriegelungsvorgang kann dergestalt sein, dass die Hauptstruktureinheit entweder in einer Vorwärts- oder eine Rückwärtsposition verriegelt werden kann.

Die Erfindung wird nun lediglich beispielhaft beschrieben, wobei insbesondere auf die beigefügten Zeichnungen Bezug genommen wird. Es zeigen:

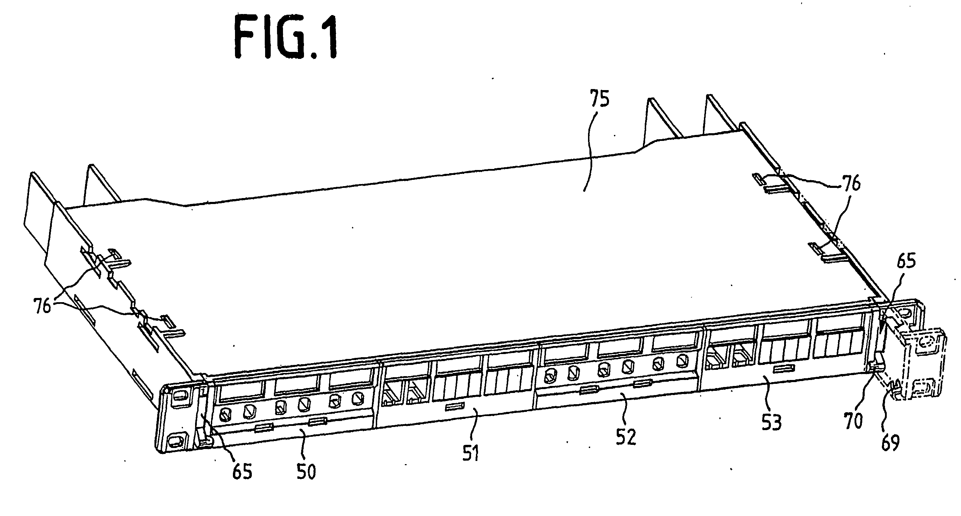

- Fig. 1:: eine perspektivische Ansicht einer Stecktafel gemäß einer Ausführungsform der vorliegenden Erfindung;
- Fig. 2:: eine ähnliche Ansicht wie Fig. 1, in der die Abdeckung der Tafel entfernt wurde, und
- Fig. 3A und 3B:: seitliche Querschnitte auf den Linien III-III von Fig. 2, die den Verriegelungsvorgang darstellen.

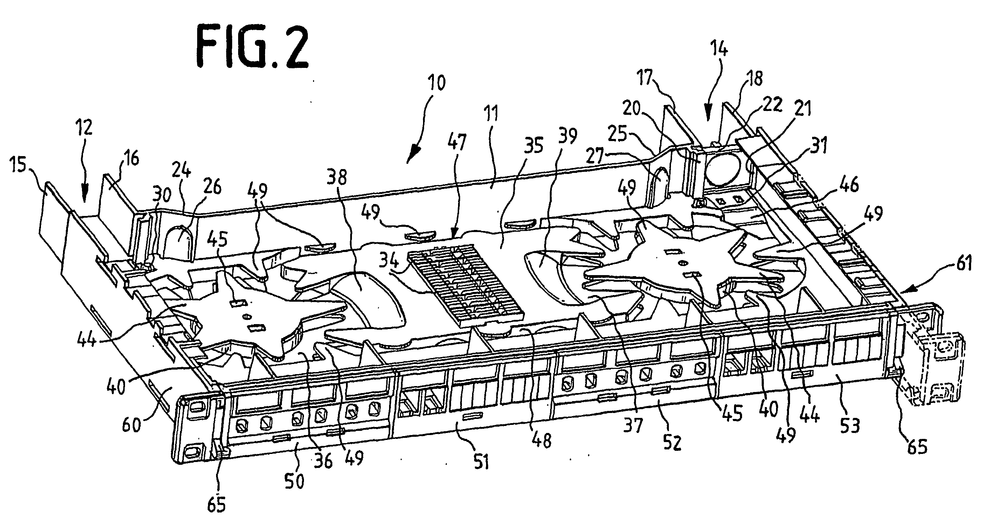

Die in Fig. 2 der Zeichnungen gezeigte Stecktafel enthält einen Hauptstrukturteil, der allgemein bei (10) gezeigt und als ein einzelnes Formteil aus Kunststoffmaterial ausgebildet ist. Das Formteil ist so geformt, daß die folgenden StrukturAusformungen geformt werden. Die Hauptstruktureinheit besitzt eine rückseitige aufrechte Wand (11), an deren gegenüberliegenden Enden Eintritte (12) und (14) bereitgestellt sind, die zwischen einem Paar beabstandeter Wandteile (15), (16), (17) und (18) definiert sind. Am inneren Ende des Eintritts (14) befinden sich einander zugewandte Formabschnitte (20) und (21), die Rillen definieren, die eine Stopfplatte (22) aufnehmen können. Ein Lichtleitfaserkabel kann durch den Eintritt (14) und durch eine Öffnung in der Stopfplatte (22) eingeführt werden. Es versteht sich, daß für den Eintritt (12) eine ähnliche Platte bereitgestellt werden kann, obwohl dies in den Zeichnungen nicht gezeigt ist.

Die Rückwand (11) besitzt abgewinkelte Teile (24) und (25), in die herausdrückbare Teile (26, 27) integriert sind. Diese können verwendet werden, wenn zusätzliche Eintritte für weitere Lichtleitfaserkabel oder -bündel bereitgestellt werden müssen.

Etwas innerhalb jedes Eintritts (12, 14) ist eine bei (30, 31) gezeigte Ausformung bereitgestellt. Diese Ausformungen besitzen eine mittige Durchgangsöffnung und können eine Schneidschraube aufnehmen, um als Ruhepunkt für ein Kevlarglied zu wirken, das zur Befestigung eines Lichtleitfaserkabels verwendet werden kann.

Der Boden oder Grund der Hauptstruktureinheit enthält eine allgemein bei (35) gezeigte mittige Oberfläche. Diese Oberfläche (35) kann Zusatzeinrichtungen wie zum Beispiel Spleißeinheiten (34) aufnehmen, die auf der Oberfläche durch Einschnappen befestigt werden können. Ausgesparte Bereiche (36) und (37) sind auf gegenüberliegenden Seiten der mittigen Oberfläche (35) angeordnet, und Rampen (38) und (39) liefern einen glatten Übergang zwischen der Oberfläche (35) und jeweiligen Bereichen (36, 37). In jedem ausgesparten Bereich (36, 37) ist eine scheibenartige Nabe (40) ausgebildet, deren Oberseite einen sternförmigen Abschnitt (44) aufweist. Es ist ersichtlich, daß in jeder Aussparung (36, 37) um die Nabe (40) herum ein ringförmiger Bereich besteht, und dieser ringförmige Bereich kann zur Unterbringung von Lichtleitfasern auf später beschriebene Weise verwendet werden. Außerdem ist ersichtlich, daß zwischen jedem ausgesparten Bereich (36, 37) und dem jeweiligen Eintritt (12, 14) eine Rampe (46) besteht. Die Oberseite jedes sternförmigen Abschnitts (44) besitzt Anbringungspunkte (45), an denen zusätzliche Einheiten befestigt werden können.

Weitere ausgesparte Abschnitte sind vor und hinter der mittigen Oberfläche (35) bereitgestellt und mit den Bezugszahlen (47) und (48) bezeichnet. Diese ergeben Kanäle, in denen sich Lichtleitfasern erstrecken können.

Die Vorsprünge (49) sowie die Punkte auf dem sternförmigen Abschnitt (44) wirken als Halteglieder für Fasern, die um die Hauptstruktureinheit gewickelt werden.

Die Vorderseite der Hauptstruktureinheit ist so konfiguriert, daß sie Tafelstücke aufnehmen kann, die durch Bezugszahlen (50 bis 53) gezeigt sind. Diese Tafelstücke sind so geformt, daß sie durch Einschnappen an der Vorderwand der Hauptstruktureinheit (10) befestigt werden können. In die Tafelstücke sind Lichtleitfaserverbinderelemente integriert, die entsprechende Verbinderelemente aufnehmen können, die an den Enden von Lichtleitfasern bereitgestellt sind, die sich von unterschiedlichen Orten aus erstrecken.

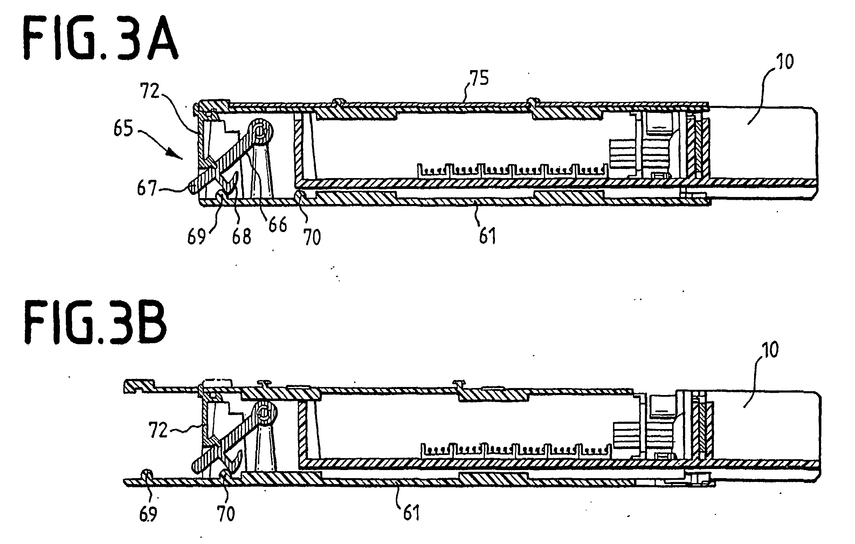

Die Stecktafel kann mittels seitlich angeordneter Längsführungselemente (60, 61) in einem Gestell gehalten werden. Diese Führungselemente werden in einem Gestell getragen und auf Bahnen gehalten, die an der Wand des Gestells befestigt sind. Die Hauptstruktureinheit der Stecktafel kann in bezug auf jedes Führungsglied mittels einer allgemein bei (65) gezeigten Verriegelung verriegelt werden. Die Verriegelung (65) umfaßt ein Schwenkglied (66), das schwenkbar auf einer Seitenwand der Hauptstruktureinheit getragen wird und außerdem ein Längsglied (67) aufweist, von dem aus die Ausformung (68) vorsteht. Wie in FIG. 3A und 3B gezeigt, kann der Vorsprung (68) eine von zwei Rippen (69, 70) ergreifen, die auf einem unteren Teil jeder seitlichen Führung ausgebildet sind. Dadurch kann die Stecktafel entweder in der in FIG. 3A gezeigten Position oder in der in FIG. 3B gezeigten Position verriegelt werden. FIG. 3A zeigt eine vordere Position und FIG. 3B zeigt eine hintere Position der Stecktafel. Das Schwenkglied (66) kann durch ein Eindrückelement (72) in seiner Verriegelungsposition gehalten werden.

Die Stecktafel wird durch eine Abdeckung (75) vervollständigt, die durch Vorsprünge auf jeder seitlichen Führung, die sich durch in der Abdeckung ausgebildete Schlitze (76) erstrecken, in ihrer Position gehalten wird.

Bei der Verwendung der Stecktafel kann ein Lichtleitfaserkabel zum Beispiel durch den Eintritt (14) eingeführt und durch die Stopfplatte (22) und über die Rampe (46) nach unten geleitet werden. Die Fasern können dann um den ringförmigen Raum um die Nabe (40) in der Aussparung (37) so oft wie möglich herum und zu der Oberfläche (35) herauf gewickelt werden. Die Fasern können dann in den Spleißeinheiten (34) gespleißt und mit anderen Fasern verbunden werden, die dann um die Nabe (40) in der Aussparung (36) gewickelt und gegebenenfalls durch Kanäle (47) und (48) geführt werden können, um so viel Reserve- bzw. überschüssige Länge der Faser bereitzustellen, wie als notwendig erachtet wird. Diese Fasern werden letztendlich zu den Tafelstücken (50, 51, 52, 53) geführt, wo sie mit den Lichtleitfaserverbinderelementen verbunden werden können, die auf diesen Tafeln getragen werden.

Die vorliegende Ausführungsform liefert deshalb eine relativ leichte Stecktafel, die einfach herstellbar ist, da die Hauptstruktureinheit als ein einziges Formteil ausgebildet werden kann. Es versteht sich, daß die Tafel insofern flexibel ist, als zusätzlich zu den Spleißeinheiten (34) oder als Alternative zu den Spleißeinheiten Einheiten auf der Oberfläche (35) verwendet werden können. Zum Beispiel ist es möglich, unter der Spleißeinheit eine Abzweigungseinheit anzubringen, in der die ankommenden Fasern, die durch den Eintritt (14) eingeführt werden, angeschlossen werden können, bevor sie aufgewickelt und zu der Spleißeinheit geführt werden.

## Patentansprüche

1. Stecktafel zur Verwendung als Kabelverwaltungssystem oder als Teil eines solchen Systems zur Verbindung von Lichtleitfasern umfassend
ein Hauptstrukturteil (10), das als ein einziges Kunststoffformteil ausgebildet ist und
mit mindestens einem Eintritt (12, 14) zur Aufnahme eines Lichtleitfaserkabels oder -bündels.
Ausformungen, die Wege definieren, entlang denen sich Lichtleitfaserabschnitte von dem Eintritt aus erstrecken können,
und
einer mittigen Oberfläche (35) im Boden des Hauptstrukturteils zur Aufnahme einer oder mehrerer Vorsatzeinrichtungen, wie zum Beispiel einer Spleißeinheit (34), versehen ist,
**dadurch gekennzeichnet, dass**
die Stecktafel ein oder mehrere Frontplattenteile (50-53) umfasst, die an der Vorderseite des Hauptstrukturteils (10) angebracht werden können,
dass die Ausformungen Aussparungen (36, 37) bilden, in denen eine Nabe (40) ausgebildet sind, sowie Rampen (46, 38, 39) umfassen,
wobei die Aussparungen (36, 37) auf gegenüberliegenden Seiten der mittigen Oberfläche (35) angeordnet sind,
wobei die Rampen (38, 39) derart ausgebildet sind, dass sie einen glatten Übergang zwischen der Oberfläche (35) und den jeweiligen Aussparungen (36,37) liefern und zwischen jeder Aussparung (36, 37) und dem jeweiligen Eintritt (12, 14) eine weitere Rampe (46) angeordnet ist.

2. Stecktafel nach Anspruch 1, wobei die Nabe (40) einen sternförmigen Abschnitt aufweist und Punkte auf dem sternförmigen Abschnitt als Halteglieder wirken.

3. Stecktafel nach Anspruch 1 oder 2, wobei das Hauptstrukturteil (10) mit Kanälen (47, 48) ausgebildet ist, in welchen die Lichtleitfaserkabel oder -bündel führbar sind.

4. Stecktafel nach einem der Ansprüche 1 bis 3 mit einem Abdeckungs- oder Deckelglied (75), das an seitlichen Führungsgliedern (60, 61), welche die Stecktafel in einem Gestell stützen, angebracht werden kann.

5. Stecktafel nach Anspruch 4 mit einer Verriegelung (65), die vorgesehen ist, um die Hauptstruktureinheit mit einem oder jedem Führungsglied zu verriegeln.

6. Stecktafel nach Anspruch 5, wobei der Verriegelungsvorgang dergestalt ist, dass die Hauptstruktureinheit entweder in einer Vorwärts- oder einer Rückwärtsposition verriegelt werden kann.

## Revendications

1. Tableau de connexion destiné à être utilisé comme système de gestion de câbles ou en tant que partie d'un tel système pour la connexion de fibres optiques, comprenant
une partie de structure principale (10) qui est réalisée sous forme de pièce moulée en plastique
et
qui est pourvue d'au moins une entrée (12, 14) pour recevoir un câble à fibres optiques ou un faisceau de câbles à fibres optiques,
de formations, qui définissent des chemins, le long desquels les portions de fibres optiques peuvent s'étendre depuis l'entrée
et
d'une surface centrale (35) au fond de la partie de structure principale, pour recevoir un ou plusieurs dispositifs auxiliaires comme par exemple une unité d'épissure (34),
**caractérisé en ce que**
le tableau de connexion comprend une ou plusieurs parties de plaque frontale (50-53) qui peuvent être montées sur le côté avant de la partie de structure principale (10),
**en ce que** les formations forment des évidements (36, 37) dans lesquels sont réalisés des moyeux (40) et comprennent aussi des rampes (46, 38, 39),
les évidements (36, 37) étant disposés sur des côtés opposés de la surface centrale (35),
les rampes (38, 39) étant réalisées de telle sorte qu'elles fournissent une transition lisse entre la surface (35) et les évidements respectifs (36, 37) et entre chaque évidement (36, 37) et l'entrée respective (12, 14) est disposée une rampe supplémentaire (46).

2. Tableau de connexion selon la revendication 1, dans lequel le moyeu (40) présente une portion en forme d'étoile et des points agissent en tant qu'organes de retenue sur la portion en forme d'étoile.

3. Tableau de connexion selon la revendication 1 ou 2, dans lequel la partie de structure principale (10) est réalisée avec des conduits (47, 48) dans lesquels les câbles ou faisceaux de câbles à fibres optiques peuvent être guidés.

4. Tableau de connexion selon l'une quelconque des revendications 1 à 3, comprenant un organe de recouvrement ou de couvercle (75), qui peut être monté sur des organes de guidage latéraux (60, 61) qui supportent le tableau de connexions dans un bâti.

5. Tableau de connexion selon la revendication 4, comprenant un verrouillage (65) qui est prévu pour verrouiller l'unité de structure principale avec un ou avec chaque organe de guidage.

6. Tableau de connexion selon la revendication 5, dans lequel l'opération de verrouillage est telle que l'unité de structure principale puisse être verrouillée soit dans une position avant soit dans une position arrière.

## Claims

1. Plugboard for use as a cable management system or as part of such a system for the connection of optical fibres, comprising
a main structure part (10) which is in the form of a single plastic moulding,
and
having at least one entry (12, 14) for holding an optical fibre cable or harness,
formed-out areas, which define paths along which optical fibre sections can extend from the entry,
and
a central surface (35) in the base of the main structure part for holding one or more projecting devices, for example a splicing unit (34), is provided,
**characterized in that**
the plugboard has one or more front panel parts (50-53) which can be fitted to the front face of the main structure part (10),
and **in that** the formed-out areas form cutouts (36, 37) in which a hub (40) is formed, and has ramps (46, 38, 39),
with the cutouts (36, 37) being arranged on opposite sides of the central surface (35),
and with the ramps (38, 39) being designed so as to produce a smooth transition between the surface (35) and the respective cutouts (36, 37), and with a further ramp (46) being arranged between each cutout (36, 37) and the respective entry (12, 14).

2. Plugboard according to Claim 1, with the hub (40) having a star-shaped section, and with points on the star-shaped section acting as holding elements.

3. Plugboard according to Claim 1 or 2, with the main structure part (10) being formed with channels (47, 48) in which the optical fibre cables or harnesses can be guided.

4. Plugboard according to one of Claims 1 to 3 having a covering or cover element (75) which can be fitted to side guide elements (60, 61), which support the plugboard in a rack.

5. Plugboard according to Claim 4 having a lock (65) which is provided in order to lock the main structure unit to one or each guide element.

6. Plugboard according to Claim 5, with the locking process being designed such that the main structure unit can be locked either in a forward position or in a rearward position.
